(19) Europäisches Patentamt

European Patent Office

Office européen des brevets

(11) **EP 0 937 619 B1**

(12) **EUROPEAN PATENT SPECIFICATION**

(45) Date of publication and mention
of the grant of the patent:
**13.11.2002 Bulletin 2002/46**

(51) Int Cl.⁷: **B60T 10/00**, B60T 1/087

(21) Application number: **98102959.8**

(22) Date of filing: **20.02.1998**

(54) **Method and control system for adaptation of the braking moment characteristic(s) of a retarder to different vehicle configurations**

Verfahren und Steuersystem zur Anpassung des Bremsmomentverhaltens eines Retarders an verschiedene Fahrzeugkonfigurationen

Procédé et système de contrôle pour adapter les caractéristiques du couple de freinage d'un ralentisseur à des configurations de véhicules différentes

(84) Designated Contracting States:
**BE DE ES FR GB IT NL SE**

(43) Date of publication of application:
**25.08.1999 Bulletin 1999/34**

(73) Proprietor: **Voith Turbo GmbH & Co. KG
89522 Heidenheim (DE)**

(72) Inventors:
• **Scherer, Roland
74564 Crailsheim (DE)**
• **Friedrich, Jürgen
74564 Crailsheim (DE)**
• **Daum, Matthias
74564 Crailsheim (DE)**

• **Lechler, Ralf
74595 Langenburg (DE)**
• **Blomberg, Dan
43900 Onsala (SE)**

(74) Representative: **Dr. Weitzel & Partner
Friedenstrasse 10
89522 Heidenheim (DE)**

(56) References cited:
FR-A- 2 498 142        US-A- 5 303 986
US-A- 5 496 098

• **PATENT ABSTRACTS OF JAPAN vol. 097, no. 002, 28 February 1997 (1997-02-28) & JP 08 266098 A (SAWAFUJI ELECTRIC CO LTD), 11 October 1996 (1996-10-11)**

**Description**

The invention relates to a method and a control system for adaptation of the braking moment characteristic(s) of a retarder to different vehicle configurations.

An adaptation of a retarder torque over a brake pedal input is shown in document US-A-5 496 098.

Adaptation of the braking moment characteristic or braking moment characteristics is especially desirable because in the case of secondary retarders, different braking performance results in the vehicle at the same retarder speed with different vehicle configurations.

Secondary retarders are retarders, which are disposed in the drive strand of the vehicle on the transmission output side, and in which the retarder speed is proportional to the output speed of the transmission. Such retarders are disclosed, for example, in "Der ZF-Intarder" by R. Schwab, W. Ertle, K.F. Heinzelmann, in the journal ATZ Automobiltechnische Zeitschrift 95 (1993), pp. 250-252.

It has hitherto been necessary to carry out expensive refits on the retarder itself to adapt such secondary retarders to achieve the same braking performance, i.e. the same vehicle deceleration for different vehicle configurations. For example, adaptation should only be achieved by appropriate selection of the transmission to the gearsets with different ratios between the compact retarder shaft and the gearbox output shaft in a high-performance retarder.

Therefore, the object of the invention is to provide a method and a control system with which the previously mentioned problems my be overcome, and which enable the adaptation of the retarder characteristic(s) to different vehicle configurations to be achieved in a simple manner.

This object is achieved according to the invention by a method with the feature in Claim 1 and by a control system in accordance with Claim 11.

A first embodiment of the invention provides that a control unit is allocated to the retarder. The rear axle transmission ratio, the wheel size and the mass (e.g. the permissible total weight of the vehicle) of the individual vehicle, in relation to which the retarder braking moment characteristic is determined according to the invention, are advantageously input into the control unit. In this case, it has proved particularly advantageous to input these magnitudes as part of the so-called end-of-line programming. This term relates to the input of individual vehicle parameters into the control unit after the production process has been concluded. It is particularly effective if, instead of the input of corresponding data for the rear axle transmission ratio, the wheel size and mass, the values are read in from feature memories. Such a feature memory can be disposed on the respective components, e.g. on the rear axle for the rear axle transmission ratio. Various embodiments of the feature memory are possible, e.g. a microchip, in which these data are filed. In a very simple embodiment, the data may be stored by means of a bar code applied to the corresponding component, which can be read by a reader unit and input into the control unit.

According to a further development of the invention, the retarder braking moment characteristic(s) is/are determined by the control unit in relation to these parameters by calculation. It is particularly advantageous for this if the speed-dependent curve of at least one characteristic, preferably the maximum retarder braking moment characteristic, is filed in the control unit in a memory area. The determination of the characteristic(s) according to the invention can be achieved in a first embodiment by the method described below with the following steps:

In the case of at least one rotational speed value of the braking moment value of the maximum characteristic of the retarder, taking into account at least one of the magnitudes: rear axle transmission ratio, wheel size and mass, adaptation is made to a preset value for the vehicle on flat ground and an adaptation factor is determined for this, so that identical braking performance is achieved for various vehicles.

A first embodiment of the invention utilises the concept that the retarder braking moment for an individual vehicle may be described approximately by the following formula in the case of a predetermined rotational speed

$$M_{Br} = \frac{m \cdot g \cdot a \cdot r}{i_{HA} \cdot 100}$$

wherein:

m :   vehicle mass
g :   acceleration due to gravity
r :   wheel radius
$i_{HA}$:   rear axle transmission ratio
a :   vehicle deceleration in %
$M_{Br}$:   secondary retarder torque as transformed to the gearbox output shaft

If the intention now is to achieve the same braking performance for different vehicles, then a reference braking moment is preset for a reference vehicle in the case of a predetermined rotational speed and vehicle deceleration.

$$M_{Br}(Ref) = \frac{m(Ref) \cdot g \cdot a \cdot r(Ref)}{i_{HA}(Ref) \cdot 100}$$

The individual braking moment $M_{BR}$ (individual) may be calculated for each other vehicle, for a predetermined rotational speed and vehicle deceleration, when the mass, rear axle transmission ratio and wheel radius are known. Should identical braking performance be desired, then a, i.e. the vehicle deceleration, must be equal, i.e. for the reference vehicle as well as an individual vehicle:

$$M_{Br}(Ref) = M_{Br}(individual) \frac{i_{HA}(individual) \cdot r(Ref) \cdot m(Ref)}{i_{HA}(Ref) \cdot r(individual) \cdot m(individual)}$$

$$= A.M_{Br}(individual)$$

i.e. the adaptation factor A, by which the individual braking moment must be modified in order to achieve identical braking performance of the individual vehicle and the reference vehicle, can be calculated very simply, if the individual vehicle magnitudes: $i_{HA}$(individual), r(individual) and m(individual), are known, with the following formula:

$$A = \frac{i_{HA}(indi)}{i_{HA}(Ref)} \cdot \frac{r(Ref)}{r(indi)} \cdot \frac{m(Ref)}{m(indi)}$$

An alternative embodiment of the invention provides that an adaptation factor may be determined to attain the same braking moment at the wheel, i.e. as follows:

For a specific rotational speed value, the maximum permissible braking moment M(Radzulässig) should be expressed in Nm. Without adaptation, a braking moment value of M(RadRetmax) = M(Radzulässig) + x·M(Radzulässig) where x > 0 should result in Nm for the braking moment occurring at the wheel, with the preset rear axle transmission ratio for this vehicle and the wheel size as well as the recorded maximum braking moment characteristic of the retarder. So as not to exceed the maximum permissible braking moment value of M(Radzulässig), the maximum retarder braking moment characteristic must be adapted for the rear axle transmission ratio and wheel size present in this individual vehicle with an adaptation factor of M(Radzulässig)/M(RadRetmax) = 1/(1+x).

As illustrated above, the mass, as individual vehicle magnitude, is not taken into consideration in such an adaptation. For example, only vehicles with exactly the same total weight, but with different wheel size and rear axle transmission ratio, then exhibit the same braking performance.

The previously described adaptations can be carried out in a first alternative embodiment of the invention over the entire rotational speed range, or may also be carried out for a partial rotational speed range. Both an adaptation of the maximum braking moment characteristic and adaptation of all braking moment characteristics allocated to various braking programs or braking stages are possible. For example, the braking moment characteristics for various braking stages of the retarder could be corrected by this factor. The vehicle would then exhibit the same braking performance in all braking programs, irrespective of the mass, rear axle transmission ratio and wheel size, i.e. the individual vehicle parameters.

In a further development of the invention, the vehicle speed may additionally be recorded, besides the mass, rear axle transmission ratio and wheel size, and the current rotational speed of the retarder may be calculated from the mass, vehicle speed, rear axle transmission ratio and wheel size.

The current braking moment of the retarder may then be determined by means of the current rotational speed of the retarder in the case of a retarder characteristic field recorded in the control unit.

In addition to the method according to the invention for adaptation of the retarder braking moment characteristic to the preset individual vehicle configuration, the invention also provides a control system for adaptation of the retarder braking moment characteristic. The control system comprises means for input of at least one of the magnitudes of mass, rear axle transmission ratio and wheel size of the braked wheels or axle(s), as well as means for output of a corrective signal for adjustment of the retarder braking moment. The system according to the invention is characterised in that the control unit outputs such a corrective signal to the retarder; that the same braking moment value is always achieved at the braked axle(s) for the braked wheel for different vehicle configurations (e.g. mass, rear axle transmission ratio, wheel size) at least for one retarder rotational speed value. A further development of the invention provides that the control unit comprises a first memory area, in which at least one of the magnitudes of mass, rear axle transmission ratio and wheel size is filed.

it is particularly advantageous if the control unit also comprises at least one further memory area; that the control unit determines an adaptation factor, taking into account at least one of the magnitudes of mass, rear axle transmission ratio and wheel size, and modifies retarder braking moment characteristic(s) filed in the second area at least in one partial rotational speed range by the adaptation factor, and outputs this as a corrective signal.

It may be provided in a further development of the invention that the system additionally comprises further means for recording the vehicle speed as well as means for reading in the vehicle speed signal.

Although the invention may also be applied to electrical retarders, such as those known from the publication "Fahrzeugkomponenten (Retarder) mehr Sicherheit und fahrgastfreundlich" (Vehicle components (Retarders) - safer and more passenger-friendly), in Bus Magazin, Vol. 8, August 1993, pp. 36-39, or from DE 296 09 311 Ua, the preferred field of application of the present invention is the field of hydrodynamic retarders.

The invention will now be described by way of example on the basis of the following figures, wherein:

Figure 1     shows a drive strand with the control system according to the invention;

Figure 2     shows the curve of the maximum characteristic of the retarder braking moment over the rotational speed, and its modification in relation to the rear axle transmission ratio, wheel size and mass;

Figure 3     shows the curve of the retarder braking moment over the rotational speed for different braking programs as well as its modification in relation to the rear axle transmission ratio, wheel size and mass.

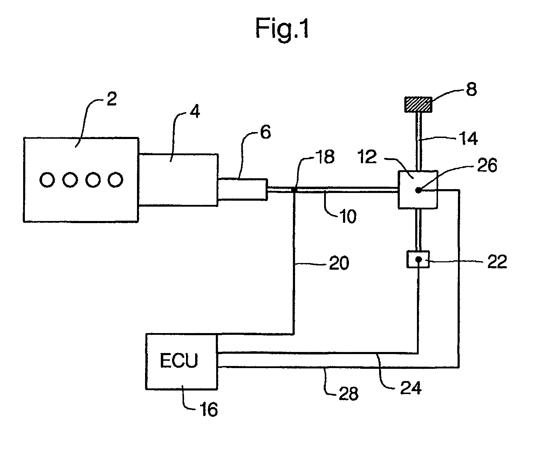

Figure 1 shows the drive strand of a vehicle with the control system according to the invention. The drive strand comprises a motor 2, a gear 4 adjoining the motor and a retarder 6 disposed on the gear. The wheels 8 are driven by way of the universal drive shaft 10 arranged on the gear output side, the rear axle transmission 12 and the rear axle 14. The control system according to the invention comprises a control unit 16, which is provided in the form of an ECU (electronic control unit) in the present embodiment. The rotational speed of the retarder is recorded via the sensor 18, for example, and in the present embodiment, is transmitted to the control unit by lead 20. In an alaternative embodiment, the rotational speed of the retarder could also be determined from the current vehicle speed when the rear axle transmission ratio and wheel size are known. The vehicle speed is recorded, for example, by means of sensor 22. The vehicle speed signal is present on lead 24. The parameters necessary for the adaptation: rear axle transmission ratio and wheel size, may be input manually into the control unit as part of an end-of-line program, or taken from a feature memory 26 for the rear axle transmission ratio or the tyres, and transmitted via lead 28 to the control unit. A read-only memory disposed on the axle, for example, is suitable as feature memory for filing the individual vehicle parameters of rear axle transmission ratio and wheel size. It would also be conceivable to use bar codes applied to these assemblies, which could be recorded by means of a reader, for example, and transferred to the control unit.

In an embodiment serving as an example, the control unit of the control system according to the invention comprises a first memory area, in which the individual vehicle parameters of mass, rear axle transmission ratio and wheel size are filed. In a second memory area, at least the maximum braking moment characteristic of the retarder used in the vehicle is recorded over the rotational speed. The rotational speed here should be understood to mean any rotational speed characteristic for the retarder behaviour, i.e. the rotational speed of the retarder itself, for example, the rotational speed of the universal drive shaft or also the driving speed. With a secondary retarder, these magnitudes all correlate with one another and may be calculated by simple conversion factors with a preset value.

According to a first embodiment, with the assistance of a computing unit integrated into the control unit, taking into account the individual vehicle values (mass, axle transmission ratio, wheel size) filed in the first memory area, it is possible to calculate the adaptation factor for this individual vehicle to attain the same braking performance as with a reference vehicle. This possibility of determining the adaptation factor is achieved by utilising the fact that the braking moment of the retarder for the individual vehicle may be described approximately by the following formula for a pre-determined rotational speed

$$M_{Br} = \frac{m \cdot g \cdot a \cdot r}{i_{HA} \cdot 100}$$

wherein:

m:     vehicle mass
g:     acceleration due to gravity
r:     wheel radius

$i_{HA}$:     rear axle transmission ratio

a:     vehicle deceleration in %

If the intention now is to always achieve the same braking performance for different vehicles, then a, i.e. the vehicle deceleration, must be equal, i.e. for the reference vehicle as well as an individual vehicle:

$$M_{Br}(Ref) = M_{Br}(individual) \; \frac{i_{HA}(individual) \cdot r(Ref) \cdot m(Ref)}{i_{HA}(Ref) \cdot r(individual) \cdot m(individual)}$$

$$= A.M_{Br}(individual)$$

i.e. the adaptation factor A, by which the individual braking moment must be modified in order to achieve indentical braking performance of the individual vehicle and the reference vehicle, can be calculated very simply, if the individual vehicle magnitudes: $i_{HA}$(individual), r(individual) and m(individual), are known.

It would, of course, be possible not to take one of the individual vehicle magnitudes into consideration in the adaptation. If the mass is not considered, then only vehicles with exactly the same total weight, for example, but with different wheel size and rear axle transmission ratio would be adapted to one another in their braking performance.

In the case of an adaption in which the mass is not taken into account, the same braking moment is recorded at the wheel. For this, the control unit comprises a third memory area, in which, for at least one specific rotational speed value of the maximum characteristic, the retarder braking moment value or values, which must be attained for this rotational speed at the wheel or the axle(s), are filed. This/these braking moment value/s is/are also referred to as reference braking moment value/s. The braking moment values are generally prodetermined by the maunfacturer at a specific rotational speed for an entire class or fleet of vehicles. In this case, the vehicle fleet can include vehicles only with the same total weight or may also include such with different total weight.

A further alternative method of determining the adaption factor comprises the following steps:

The adaptation factor A is given an intial value, say 1. During a setting procedure the current (normally fully loaded) the vehicle is retarded by the retarder on flat ground and the vehicle speed and vehicle deceleration are determined, e.g. by the vehicle speed signal. The deceleration is then compared to the record of a similar deceleration of the reference vehicle. That record can be either measured or calculated and can be stored in the control units. The adaptation factor is then the scaling factor to make the decelerations equal.

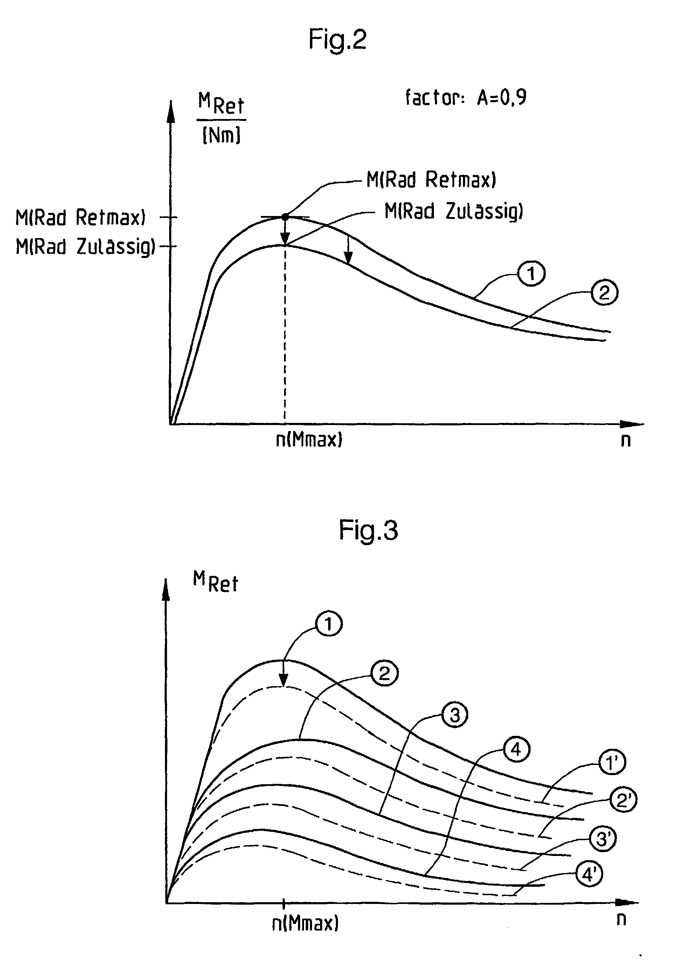

According to an alternative embodiment shown, the adaptation can be carried out for a retarder braking moment characteristic, or in a further development of the invention may also be carried out for all retarder braking moment characteristics, for different braking programs with the adaptation factor. An adaptation method based on an adaptation factor is shown by way of example for the maximum braking moment characteristic in Figure 2. Figure 2 shows the curve of the maximum retarder braking moment characteristic ①, as it is filed for the retarder installed in the vehicle, for example, in the second memory area. The adaptation factor A is determined taking into consideration the magnitudes of mass, rear axle transmission ratio input for the rear axle used in this vehicle as well as the weels mounted on this vehicle, for example, as part of an end-of-line program. The resulting adaptation factor is used to modify the filed characteristic. In the present example, a factor of A = 0.9 is calculated for the rotational speed value n($M_{max}$). Adaptation may now be carried out by modifying the maximum braking moment characteristic by this factor for the entire rotational speed range, for example, by multiplying each individual moment characteristic value dependent on the rotational speed by this adaptation facotr. It is also possible to only modify a partial rotational speed. The latter solution is considered in particular for the partial range with rotational speed n > n($M_{max}$), since there is only a slight difference in the initial slope of the retarder braking moment characteristic for the modified and the non-modified characteristic curve.

If the intention is to achieve the same braking features in all braking programs irrespective of the individual vehicle parameters for the vehicle, then a further development of the invention provides that all characteristics filed for the respective braking program are modified by the factor determined, for example, according to Figure 2.

Such a modification of an entire retarder characteristic field is shown in Figure 3.

The three retarder braking moment characteristics ①, ②, ③, ④ filed in the control unit, for example, for the four retarder braking stages, which should be representative for the different retarder braking program, are recorded in Figure 3. The characteristic ① corresponds to the maximum retarder braking moment characteristic in Figure 2, in the following practical example. As described, a factor is determined, by which, in the case of the rotational speed n ($M_{max}$), the braking moment of the maximum retarder braking moment characteristic must be reduced in order to attain the same braking performance or the same braking moment at the wheel for the present rear axle or wheel size and vehicle mass. With the assistance of this adaptation factor determined by adapting the maximum retarder braking moment characteristic to the present retarder braking moment, not only the maximum retarder braking moment characteristic but also all the retarder braking moment characteristics recorded for the different braking programs are now modified. As shown in Figure 3, the dot-dash characteristics ① , ② , ③ , ④  result.

As a general rule, the adaptation factor for the retarder braking moment characteristic is determined from the individual vehicle data before installation of the retarder and filed in the control device of the retarder. When invoking the braking program, the standard braking program filed for the retarder type is then selected and modified with this, so that exactly the same braking performance is always provided for the driver in spite of using standard components in the broadest range of vehicle types.

Therefore, by modification by the adaptation factor determined in accordance with the present invention it is now possible, in a simple manner and for a wide range of individual vehicle configurations, e.g. vehicle mass, rear axle transmission ratio or also wheel size, to always attain in the same braking stage the same braking performance of the vehicle, using standard components without any structural adaptation, for example, of the retarder high drive performance.

## Claims

1.  Method for adaptation of the braking moment characteristic(s) over the rotational speed of a retarder (6) of a vehicle to a preset individual vehicle configuration,

    -   in which the retarder braking moment characteristic over the rotational speed is determined in relation to at least one of the magnitudes of rear axle transmission ratio, wheel size and/or mass of the individual vehicle in such a way that the same preset braking performance is always provided on the vehicle at least for one predetermined vehicle speed value; i.e. the vehicle deceleration at said one predetermined vehicle speed value is equal for different vehicles; and
    -   in which a control unit (16) is allocated to the retarder and at least one of the magnitudes of rear axle transmission ratio, wheel size, mass of the individual vehicle is input or read into the control unit, whereby said at least one of the magnitudes is either input as part of a so-called end-of-line program for the respective individual vehicle or read from feature memory (26).

2.  Method according to claim 1,
    **characterised in that** the speed-dependent curve of at least the maximum retarder braking moment characteristic is filed in the control unit (16).

3.  Method according to one of Claims 1 to 2,
    **characterised in that** the retarder braking moment characteristic(s) is/are determined by the control unit (16) in dependence on the read-in parameters.

4.  Method according to one of Claims 1 to 3,
    **characterised in that** the maximum retarder braking moment characteristic is determined by adaptation of at least one braking moment value of the maximum retarder braking moment characteristic to the braking moment given at this rotational speed at the braked wheel or the braked axle(s), and an adaptation factor is determined for this.

5.  Method according to claim 4, **characterised in that** the adaption factor is determined as follows:

    the adaption factor is given an inital value in a setting procedure the vehicle is retardered by the retarder (6) on flat ground, whereby the vehicle deceleration is determined, said determined deceleration is then compared to the record of a reference vehicle deceleration and the value of the adaption factor is then calculated by making the decelerations equal.

6.  Method according to one of claims 4 to 5, **characterised in that** the maximum retarder braking moment characteristic is determined in dependence on the read-in parameters by means of the adaptation factor for the entire rotational speed range.

7.  Method according to one of Claims 4 to 6, **characterised in that** the maximum retarder braking moment characteristic is determined in dependence on the read-in parameters by means of the adaptation factor for a partial rotational speed range.

8.  Method according to one of Claims 4 to 7, **characterised in that** all the retarder braking moment characteristics allocated to the different braking programs of the retarder (6) are determined by means of the adaptation factor over the entire rotational speed range or an partial rotational speed range.

9. Method according to one of Claims 4 to 8,
   **characterised in that** in addition of the rear axle transmission ratio and wheel size, the speed of the vehicle is constantly recorded.

10. Method according to Claim 9, **characterised in that**
    the vehicle speed is read into the control unit (16) and the current rotational speed of the retarder (6) is determined as vehicle speed, rear axle transmission ratio and wheel size.

11. Control system for adaptation of the retarder braking moment characteristic(s) over the rotational speed of a retarder of a vehicle to a preset individual vehicle configuration, whereby the control system at least comprises:

    a control unit (16);
    means for manually input or read from feature memory (26) of at least one of the following magnitudes of rear axle transmission ratio, wheel size and/or mass of the individual vehicle; and
    means for output of a corrective signal for adjustment of the retarder braking moment;

    **characterised in that** the control unit (16) outputs such a corrective signal to the retarder (6); that the same braking performance is always achieved for the vehicle for different vehicle configurations at least for one predetermined retarder rotational speed value; i.e. the vehicle deceleration at said one predetermined rotational speed value is equal for different vehicles.

12. Control system according to Claim 11, **characterised in that** the control unit (16) comprises a first memory area, in which at least one of the following magnitudes of mass, rear axle transmission ratio and/or wheel size is filed.

13. Control system according to one of Claims 11 to 12,
    **characterised in that**
    the control unit (16) comprises a second memory area;
    the control unit (16) determines an adaptation factor, taking into account the individual vehicle configuration; and modifies retarder braking moment characteristic(s) filed in the second area at least in one partial rotational speed range by the adaptation factor, and outputs this retarder braking moment as a corrective signal.

14. Control system according to one of Claims 11 to 13,
    **characterised in that** the system comprises further means for recording the vehicle speed and means for reading in the vehicle speed signal.

15. Control system according to one of Claims 11 to 14,
    the retarder is a hydrodynamic retarder.


**Patentansprüche**

1. Verfahren zur Anpassung der Bremsmomenteigenschaft(en) über die Drehzahl eines Retarders (6) eines Fahrzeugs an eine voreingestellte individuelle Fahrzeugkonfiguration,

   - wobei die Bremsmomenteigenschaft des Retarders über die Drehzahl bestimmt wird im Verhältnis zu mindestens einer der Größen Hinterachsübersetzung, Radgröße und/oder Masse des individuellen Fahrzeugs, so dass die selbe voreingestellte Bremsleistung auf dem Fahrzeug immer mindestens für einen vorbestimmten Fahrzeuggeschwindigkeitswert gegeben ist, d. h. die Fahrzeugverzögerung bei der bestimmten Fahrzeuggeschwindigkeit ist für unterschiedliche Fahrzeuge gleich; und
   - wobei dem Retarder eine Reglereinheit (16) zugeordnet ist und mindestens eine der Größen Hinterachsübersetzung, Radgröße, Masse des individuellen Fahrzeugs in die Reglereinheit eingegeben oder eingelesen wird, wobei die mindestens eine Größe entweder als Teil eines sogenannten Zeilenendprogramms für das jeweilige individuelle Fahrzeug eingegeben oder vom Featurespeicher (26) eingelesen wird.

2. Verfahren nach Anspruch 1, **dadurch gekennzeichnet, dass** die geschwindigkeitsabhängige Kurve mindestens der Eigenschaft des maximalen Retarderbremsmoments in der Reglereinheit (16) eingetragen ist.

3. Verfahren nach einem der Ansprüche 1 bis 2, **dadurch gekennzeichnet, dass** die Eigenschaft(en) des Retarderbremsmoments von der Reglereinheit (16) in Abhängigkeit von den eingelesenen Parametern bestimmt wird (werden).

4. Verfahren nach einem der Ansprüche 1 bis 3, **dadurch gekennzeichnet, dass** die Eigenschaft des maximalen Retarderbremsmoments durch Anpassung von mindestens einem Bremsmomentwert der Eigenschaft des maximalen Retarderbremsmoments an das bei dieser Drehzahl am gebremsten Rad oder der/den gebremsten Achse (n) gegebene Bremsmoment bestimmt wird und dafür ein Anpassungsfaktor festgelegt wird.

5. Verfahren nach Anspruch 4, **dadurch gekennzeichnet, dass** der Anpassungsfaktor wie folgt bestimmt wird:

   der Anpassungsfaktor erhält einen Anfangswert in einem Einstellverfahren, in dem das Fahrzeug von dem Retarder (6) auf ebenem Boden verzögert wird, wobei die Fahrzeugverzögerung festgelegt und die festgelegte Verzögerung in der Folge mit dem Eintrag einer Referenzfahrzeugverzögerung verglichen und der Wert des Anpassungsfaktors sodann durch Gleichsetzung der Verzögerungen ermittelt wird.

6. Verfahren nach einem der Ansprüche 4 bis 5, **dadurch gekennzeichnet, dass** die Eigenschaft des maximalen Retarderbremsmoments in Abhängigkeit von den eingelesenen Parametern mittels des Anpassungsfaktors für den gesamten Drehzahlbereich ermittelt wird.

7. Verfahren nach einem der Ansprüche 4 bis 6, **dadurch gekennzeichnet, dass** die Eigenschaft des maximalen Retarderbremsmoments in Abhängigkeit von den eingelesenen Parametern mittels des Anpassungsfaktors für einen partiellen Drehzahlbereich ermittelt wird.

8. Verfahren nach einem der Ansprüche 4 bis 7, **dadurch gekennzeichnet, dass** alle den unterschiedlichen Bremsprogrammen des Retarders (6) zugeordnete Eigenschaften des Retarderbremsmoments mittels des Anpassungsfaktors über den gesamten Drehzahlbereich oder einen partiellen Drehzahlbereich ermittelt werden.

9. Verfahren nach einem der Ansprüche 4 bis 6, **dadurch gekennzeichnet, dass** zusätzlich zur Hinterachsübersetzung und zur Radgröße auch die Geschwindigkeit des Fahrzeugs konstant aufgezeichnet wird.

10. Verfahren nach Anspruch 9, **dadurch gekennzeichnet, dass** die Fahrzeuggeschwindigkeit in die Reglereinheit (16) eingelesen und die aktuelle Drehzahl des Retarders (6) als Fahrzeuggeschwindigkeit, Hinterachsübersetzung und Radgröße bestimmt wird.

11. Reglersystem zur Anpassung der Eigenschaft(en) des Retarderbremsmoments über die Drehzahl eines Retarders eines Fahrzeugs an eine individuelle Fahrzeugkonfiguration, wobei das Reglersystem mindestens umfasst:

    eine Reglereinheit (16);
    Mittel für die manuelle Eingabe oder Einlesung aus dem Featurespeicher (26) mindestens einer der Größen Hinterachsübersetzung, Radgröße und/oder Masse des individuellen Fahrzeugs; und
    Mittel für die Ausgabe eines Korrektursignals zur Anpassung des Retarderbremsmoments;
    **dadurch gekennzeichnet, dass** die Reglereinheit (16) ein solches Korrektursignal an den Retarder (6) ausgibt; dass immer die selbe Bremsleistung für das Fahrzeug bei unterschiedlichen Fahrzeugkonfigurationen mindestens für einen bestimmten Retarderdrehzahlwert erreicht wird, d. h. die Fahrzeugverzögerung bei dem einen bestimmten Drehzahlwert ist für unterschiedliche Fahrzeuge gleich.

12. Reglersystem nach Anspruch 11, **dadurch gekennzeichnet, dass** das Reglersystem (16) einen ersten Speicherbereich umfasst, in dem mindestens eine der Größen Masse, Hinterachsübersetzung und/oder Radgröße eingetragen ist.

13. Reglersystem nach einem der Ansprüche 11 bis 12, **dadurch gekennzeichnet, dass**
    die Reglereinheit (16) einen zweiten Speicherbereich umfasst;
    die Reglereinheit (16) unter Berücksichtigung der individuellen Fahrzeugkonfiguration einen Anpassungsfaktor festlegt; und
    die Eigenschaft(en) des im zweiten Bereich eingetragenen Retarderbremsmoments mindestens in einem partiellen Drehzahlbereich durch den Anpassungsfaktor modifiziert und dieses Retarderbremsmoment als Korrektursignal ausgibt.

**14.** Reglersystem nach einem der Ansprüche 11 bis 13, **dadurch gekennzeichnet, dass** das System des weiteren Mittel zur Aufzeichnung der Fahrzeuggeschwindigkeit und Mittel zum Einlesen des Fahrzeuggeschwindigkeitssignals umfasst.

**15.** Reglersystem nach einem der Ansprüche 11 bis 14, wobei der Retarder ein hydrodynamischer Retarder ist.

**Revendications**

**1.** Procédé pour l'adaptation des caractéristiques de couple de freinage à l'aide de la vitesse de rotation d'un retardateur (6) d'un véhicule en fonction d'une configuration individuelle de véhicule prédéterminée,
dans lequel la caractéristique de couple de freinage du retardateur en fonction de la vitesse de rotation est déterminé par rapport à au moins une des grandeurs comprenant le rapport de transmission de l'essieu arrière, la taille des roues et/ou la masse du véhicule concerné, de telle sorte que le même résultat de freinage prédéterminé soit toujours produit pour le véhicule au moins pour une vitesse prédéterminée du véhicule, c'est-à-dire que la décélération du véhicule à cette vitesse prédéterminée au moins soit la même pour des véhicules différents,
et dans lequel une unité de contrôle (16) est associée au retardateur et au moins une des grandeurs comprenant le rapport de transmission de l'essieu arrière, la taille des roues et/ou la masse du véhicule concerné est saisie ou lue dans le circuit de contrôle, de sorte que ladite grandeur au nombre d'un au moins est soit saisie dans un programme dit terminal du véhicule concerné, soit lue dans une mémoire de fonction (26).

**2.** Procédé selon la revendication 1, **caractérisé en ce que** la courbe en fonction de la vitesse de la caractéristique de couple de freinage maximum du retardateur, au moins, est saisie dans l'unité de contrôle (16).

**3.** Procédé selon l'une quelconque des revendications 1 ou 2, **caractérisé en ce que** la ou les caractéristiques de couple de freinage du retardateur sont déterminées par l'unité de contrôle (16) en fonction des paramètres lus.

**4.** Procédé selon l'une quelconque des revendications 1 à 3, **caractérisé en ce que** la caractéristique de couple de freinage maximum du retardateur est déterminée par adaptation d'une valeur de couple de freinage, au moins, de la caractéristique de couple de freinage maximum du retardateur au couple de freinage obtenu à cette vitesse de rotation sur la roue freinée ou l'essieu (les essieux) freiné(s), et un facteur d'adaptation est déterminé pour cela.

**5.** Procédé selon la revendication 4, **caractérisé en ce que** le facteur d'adaptation est déterminé de la manière suivante : une valeur initiale est attribuée au facteur d'adaptation selon une procédure de réglage du véhicule au cours de laquelle le véhicule est ralenti par le retardateur (6) en terrain plat, de façon à déterminer la décélération du véhicule, ladite décélération déterminée est ensuite comparée à l'enregistrement d'une décélération du véhicule de référence et la valeur du facteur d'adaptation est ensuite calculée en égalisant les décélérations.

**6.** Procédé selon l'une quelconque des revendications 4 à 5, **caractérisé en ce que** la caractéristique de couple de freinage maximum du retardateur est déterminée en fonction des paramètres lus au moyen du facteur d'adaptation pour toute la plage de vitesses de rotation.

**7.** Procédé selon l'une quelconque des revendications 4 à 6, **caractérisé en ce que** la caractéristique de couple de freinage maximum du retardateur est déterminée en fonction des paramètres lus au moyen du facteur d'adaptation pour une partie de la plage de vitesses de rotation.

**8.** Procédé selon l'une quelconque des revendications 4 à 7, **caractérisé en ce que** toutes les caractéristiques de couple de freinage du retardateur affectées aux différents programmes de freinage du retardateur (6) sont déterminées au moyen du facteur d'adaptation pour toute la plage de vitesses de rotation ou une partie de la plage de vitesses de rotation.

**9.** Procédé selon l'une quelconque des revendications 4 à 8, **caractérisé en ce qu'**outre le facteur de transmission de l'essieu arrière et la taille des roues, la vitesse du véhicule est enregistrée en permanence.

**10.** Procédé selon la revendication 9, **caractérisé en ce que** la vitesse du véhicule est lue dans l'unité de contrôle (16) et la vitesse de rotation actuelle du retardateur (6) est déterminée comme la vitesse du véhicule, le rapport de transmission de l'essieu arrière et la taille des roues.

**11.** Système de contrôle pour l'adaptation des caractéristiques de couple de freinage du retardateur à l'aide de la vitesse de rotation d'un retardateur d'un véhicule en fonction d'une configuration individuelle de véhicule prédéterminée, le système de contrôle comprenant au moins :

une unité de contrôle (16),
des moyens de saisie manuelle ou de lecture dans une mémoire de
fonction (26) d'au moins une des grandeurs comprenant le rapport de transmission de l'essieu arrière, la taille des roues et/ou la masse du véhicule concerné, et
des moyens pour délivrer un signal de correction en vue de l'ajustement du couple de freinage du retardateur,

**caractérisé en ce que** l'unité de contrôle (16) délivre ce signal de correction au retardateur (6), de telle sorte que le même résultat de freinage prédéterminé soit toujours produit pour le véhicule au moins pour une vitesse prédéterminée du véhicule, c'est-à-dire que la décélération du véhicule à cette vitesse de rotation prédéterminée soit la même pour des véhicules différents.

**12.** Système de contrôle selon la revendication 11, **caractérisé en ce que** l'unité de contrôle (16) comprend une première zone de mémoire dans laquelle est enregistrée l'une au moins des grandeurs comprenant la masse, le rapport de transmission de l'essieu arrière et/ou la taille des roues.

**13.** Système de contrôle selon l'une quelconque des revendications 11 à 12,
**caractérisé en ce que** l'unité de contrôle (16) comprend une deuxième zone de mémoire ;
l'unité de contrôle (16) détermine un facteur d'adaptation en tenant compte de la configuration du véhicule concerné et modifie la ou les caractéristiques de couple de freinage du retardateur enregistrée(s) dans la deuxième zone dans une partie au moins de la plage de vitesses de rotation, en fonction du facteur d'adaptation, et délivre ce couple de freinage du retardateur sous la forme d'un signal de correction.

**14.** Système de contrôle selon l'une quelconque des revendications 11 à 13,
**caractérisé en ce que** le système comprend en outre des moyens pour lire la vitesse du véhicule et des moyens pour lire le signal de vitesse du véhicule.

**15.** Système de contrôle selon l'une quelconque des revendications 11 à 14,
**caractérisé en ce que** le retardateur est un retardateur hydrodynamique.

## Fig.1

Fig.2

factor: A=0,9

Fig.3